# EUROPÄISCHE PATENTSCHRIFT

(11) **EP 3 519 247 B1**
(45) Veröffentlichungstag und Bekanntmachung des Hinweises auf die Patenterteilung: **19.05.2021**
(21) Anmeldenummer: 17767744.0
(22) Anmeldetag: 30.08.2017
(51) Int. Cl.: B60Q 3/54

(54) **VERKLEIDUNGSTEIL FÜR EIN KRAFTFAHRZEUG**
TRIM PANEL FOR A MOTOR VEHICLE
ÉLÉMENT D'HABILLAGE POUR VÉHICULE AUTOMOBILE

(30) Priorität: 28.09.2016 DE 102016218634
(43) Veröffentlichungstag der Anmeldung: 07.08.2019
(73) Patentinhaber: Volkswagen Aktiengesellschaft, 38440 Wolfsburg (DE)
(72) Erfinder: QUAPPEN, Malte, 38100 Braunschweig (DE); SIRB, Arvid, 38165 Flechtorf (DE); AZARIAN, Robin, 38442 Wolfsburg (DE)
(86) Internationale Anmeldenummer: PCT/EP2017/071691
(87) Internationale Veröffentlichungsnummer: WO 2018/059862

(56) Entgegenhaltungen:
- DE-U1-202012 009 287

## Beschreibung

Die Erfindung betrifft ein Verkleidungsteil für ein Kraftfahrzeug mit den Merkmalen vom Oberbegriff des Patentanspruchs 1. Die Erfindung betrifft auch ein Kraftfahrzeug mit einem solchen Verkleidungsteil sowie ein Verfahren zur Herstellung eines solchen Verkleidungsteils.

Der Anspruch der Kunden ist auch an das Erscheinungsbild einer im Innenraum eines Kraftfahrzeugs erzeugbaren Beleuchtung hoch. Eine Innenraumbeleuchtung soll für ein angenehmes Ambiente sorgen und dient auch der Verwirklichung eines exklusiven Erscheinungsbildes des Innenraums.

Dekorflächen von Verkleidungsteilen im Innenraum eines Kraftfahrzeugs bieten eine besondere Möglichkeit, ein Ambientelicht in geeigneter Weise zu inszenieren. Beispielsweise kann durch hinterleuchtete bzw. hinterleuchtbare Dekorflächen ein bei Nacht sichtbares Oberflächendesign (Nachtdesign) erzeugt werden, welches von einem Oberflächendesign bei nicht hinterleuchteter Dekorfläche (Tagdesign) spürbar abweicht.

Insbesondere in Sondermodellen werden daher zunehmend Verkleidungsteile eingebaut, welche hinterleuchtbar sind und so eine besondere Ambientebeleuchtung erzeugen können. Allerdings führt dies bei solchen Sondermodellen zu einer Erhöhung der Teilevielfalt und des Montageaufwandes. Insbesondere muss wenigstens eine zusätzliche Lichtquelle zur Hinterleuchtung des Verkleidungsteils an diesem montiert werden. Des Weiteren muss diese Lichtquelle in geeigneter Weise lichttechnisch abgeschottet werden, damit die Gefahr von unerwünschtem Streulicht beseitigt werden kann.

Dekorflächen aufweisende Verkleidungsteile werden in der Regel so erzeugt, dass eine auf wenigstens einer Seite mit einer dekorativen Schicht bedruckte, lichtdurchlässige Folie (Dekorfolie) mit einer die Dekorfolie stabilisierenden Schicht hinterspritzt wird. Die stabilisierende Schicht ist vorzugsweise eine Kunststoffschicht. Sie ist notwendig, da die Dekorfolie alleine nicht die gewünschte Festigkeit aufweisen würde.

Damit ein solches Verkleidungsteil durch eine nachträglich montierte Lichtquelle hinterleuchtbar bleibt, muss die die Dekorfolie stabilisierende Schicht zusätzlich lichtdurchlässig, also zumindest transluzent oder sogar transparent ausgebildet sein. Die Zwischenschaltung einer lichtdurchlässigen Schicht zwischen Lichtquelle und Dekorfolie führt jedoch - zusätzlich zu den oben bereits genannten Nachteilen - zu einer Verschlechterung des lichttechnischen Wirkungsgrades. Dies kann sich beispielsweise in einem unpräzisen oder "verwaschen" wirkenden Lichteffekt bemerkbar machen.

In der DE 10 2007 057 934 A1 wird ein Innenverkleidungsteil beschrieben. Bei diesem Innenverkleidungsteil wird eine Oberseite bereichsweise durch ein tiefgezogenes Metallteil gebildet, welches mit Aussparungen versehen ist. Das Metallteil ist zunächst mit einer ersten Kunststoffschicht hinterspritzt, wobei die Aussparungen durch geeignete Schieber zunächst verschlossen wurden. Die erstgenannte, transparente Kunststoffschicht ist wiederum mit einer weiteren, transparenten Kunststoffschicht hinterspritzt, welche die genannten Aussparungen im Metallteil ausfüllt und etwas überragt. Hinter der erstgenannten Kunststoffschicht ist eine Leuchtfolie (Elektrolumineszensfolie) angeordnet, welche auf die Kunststoffschicht fest aufgebracht, beispielsweise aufgeklebt oder aufgesiegelt ist. Die Leuchtfolie wird von der weiteren Kunststoffschicht abgedeckt. Eine elektrische Kontaktierung ist in die weitere Kunststoffschicht eingespritzt.

Aus der DE 10 2009 017 363 A1 ist ein Innenverkleidungsteil mit den Merkmalen vom Oberbegriff des Anspruchs 1 bekannt. Konkret umfasst das Innenverkleidungsteil eine zumindest teilweise transparente Dekorfolie. Die Dekorfolie ist mit einer ersten, transparenten Kunststoffschicht hinterspritzt, welche einen verdickten, eine dekorative Struktur bildenden Teilbereich aufweist. Die erste transparente Kunststoffschicht ist wiederum mit einer weiteren, nicht transparenten Kunststoffschicht hinterspritzt. Von einer seitlich des Innenverkleidungsteils angeordneten Lichtquelle kann Licht seitlich in die erste transparente Kunststoffschicht eingekoppelt werden. Das eingekoppelte Licht ist über den verdickten Teilbereich senkrecht zur Flächenerstreckung des Innenverkleidungsteils wieder auskoppelbar. Bei ebenfalls transparenter Ausbildung auch der weiteren Kunststoffschicht kann das Innenverkleidungsteil auch durch eine hinter dem Innenverkleidungsteil angeordnete Lichtquelle hinterleuchtet werden.

Auch der US 2002/0101738 A1 ist ein Innenverkleidungsteil mit den Merkmalen vom Oberbegriff des Patentanspruchs 1 entnehmbar. Bei diesem Innenverkleidungsteil ist eine transparente oder transluzente Oberschicht vorhanden, welche mit einer Schaumbeziehungsweise Polsterschicht hinterschäumt ist. Die Schaumschicht wird von mehreren, rohrartigen Lichtleitern durchdrungen, deren stirnseitiges Ende bis an die Oberschicht des Innenverkleidungsteils heranreicht. Am gegenüberliegenden Ende der Lichtleiter sind Lichtquellen in Form von Leuchtdioden oder Glühlampen vorhanden. Dadurch sind auf der sichtbaren Oberseite des Innenverkleidungsteils punkt- beziehungsweise rasterartige Bereiche wahrnehmbar, sobald die Lichtquellen eingeschaltet sind.

Schließlich wird noch in der DE 20 2012 009 287 U1 eine Fahrzeugverkleidung offenbart, die einen stützenden Rahmen aufweist, der mit einer elastischen Garnitur bedeckt ist. Die Garnitur weist zur Sichtseite eine Haut aus synthetischem oder natürlichem Material auf, welche mit einer komprimierbaren Zwischenschicht aus Schaumstoff oder dergleichen unterfüttert ist. Um die Flexibilität in der Veränderung des Erscheinungsbildes der Fahrzeugverkleidung zu erhöhen, ist ein auswechselbares Dekorelement rastend mit einem Halter der Garnitur verbunden. Es wird auch vorgeschlagen, unter dem Dekorelement eine Lichtquelle anzuordnen, welche als elektrolumineszierende Folie oder als Glasfasermatte ausgebildet sein kann.

Ausgehend von dem genannten Stand der Technik liegt der vorliegenden Erfindung die Aufgabe zu Grunde, ein Verkleidungsteil bereitzustellen, mit dem die oben genannten Nachteile vermieden werden können.

Diese Aufgabe wird mit den Merkmalen von Patentanspruch 1 und / oder 12 erzielt. Vorteilhafte Ausbildungen beziehungsweise Weiterbildungen der Erfindung sind den abhängigen Ansprüchen zu entnehmen.

Die Erfindung geht zunächst aus von einem Verkleidungsteil für ein Kraftfahrzeug, wobei das Verkleidungsteil eine im Montagezustand (also im Einbauzustand des Verkleidungsteil am oder im Kraftfahrzeug) durch eine zumindest bereichsweise lichtdurchlässige Dekorfolie gebildete, sichtbare Oberseite aufweist. Auf der Oberseite ist wenigstens ein Bereich ausgebildet, der durch das Licht wenigstens einer Lichtquelle erhellbar und zumindest bei Einschaltung der Lichtquelle wahrnehmbar ist.

Das Verkleidungsteil kann als ein Innenverkleidungsteil für den Innenraum des Kraftfahrzeugs ausgebildet sein. Beispielsweise ist die Ausbildung als Instrumententafelverkleidung, als Türverkleidung, als Dachhimmelverkleidung oder als Mittelkonsolenverkleidung denkbar.

Das Verkleidungsteil kann aber auch als ein Außenverkleidungsteil für einen äußeren Bereich des Kraftfahrzeugs ausgebildet sein. Beispielsweise ist die Ausbildung als

Verkleidungsteil eines Außenspiegels oder als Verkleidungsteil einer A-, B, oder C-Säule denkbar.

Erfindungsgemäß wird nun vorgeschlagen, dass eine die wenigstens eine Lichtquelle aufweisende Lichteinheit an einer der Oberseite gegenüberliegenden Unterseite der Dekorfolie angeordnet ist und in Schichtreihenfolge von einer ersten, das Verkleidungsteil stabilisierenden, opaken (lichtundurchlässigen) Schicht abgedeckt wird.

Mit anderen Worten ist die Lichteinheit somit zwischen der Dekorfolie und der opaken Schicht fest eingebettet. Insbesondere ist sie -ausgenommen zur genannten Oberseite hinlichtdicht eingebettet, so dass kein unerwünschtes Streulicht in andere Richtungen gelangen kann. Die Dekorfolie, die Lichteinheit und die opake Schicht bilden auf diese Weise eine fest miteinander verbundene, leicht montierbare Baueinheit. Die Montage weiterer Bauteile zur lichttechnischen Abdichtung ist nicht mehr vonnöten.

Die Dekorfolie des Verkleidungsteils ist auf vielfältige Art und Weise erzeugbar. Beispielsweise kann eine der Dekorfolie zugrundeliegende lichtdurchlässige, also transluzente oder transparente Folie nur auf einer Seite mit einer oder mehreren Schichten versehen, beispielsweise bedruckt sein. Die wenigstens eine aufgebrachte Schicht führt zu einem dekorativen Erscheinungsbild. Die eine Seite kann der sichtbaren Oberseite des Verkleidungsteils zugewandt oder abgewandt sein. Auch der Fall ist denkbar, dass beide Seiten der lichtdurchlässigen Folie mit jeweils einer oder mehreren Schichten versehen sind.

Gemäß einer ersten Weiterbildung der Erfindung wird vorgeschlagen, dass die opake Schicht schwarz ist. Hierdurch kann eine optimale lichttechnische Abschottung erzielt werden.

Nach einer zweiten Weiterbildung wird eine die Lichteinheit mit Strom versorgende Stromversorgungsschnittstelle zu einem Bordnetz durch die opake Schicht zumindest überwiegend abgedeckt. Dies trägt zu einer weiteren Montagevereinfachung bei. Ist die Stromversorgungsschnittstelle beispielsweise als elektrischer Steckverbinder ausgebildet ist, so kann durch ein zumindest teilweises Miteinspritzen des elektrischen Steckverbinders und/oder zugehöriger Kabel ein bei der Montage hinderliches Freiliegen solcher Komponenten vermieden und auch eine Stabilitätserhöhung im Kontaktierungsbereich erzielt werden.

In einer anderen Ausbildung des Erfindungsgedankens ist die die Lichteinheit mit Strom versorgende Stromversorgungsschnittstelle als induktive Schnittstelle ausgebildet. Es erfolgt also ein Energieaustausch zwischen der induktiven, verkleidungsseitigen Schnittstelle und einer induktiven, fahrzeugseitigen Schnittstelle auf Basis einer elektromagnetischen Induktion. Auf einen mit dem Bordnetz mechanisch zu verbindenden Steckverbinder kann also gänzlich verzichtet werden, was zu einer weiteren Reduzierung des Montageaufwandes führt.

Es kann wünschenswert sein, optische Veränderungen der Hinterleuchtung der Dekorfolie durchführen zu können. Vorstellbar ist insbesondere, eine Veränderung der Lichtintensität und/oder der Lichtfarbe durch geeignete Ansteuerung der Lichteinheit vornehmen zu können. Daher ist es sehr zweckmäßig, wenn eine Steuerungsschicht zur Ansteuerung der Lichteinheit vorhanden ist, die ebenfalls von der opaken Schicht abgedeckt wird.

Dabei kann die Steuerungsschicht eine Ansteuerung durch Gestik eines Fahrzeuginsassen zulassen. Beispielsweise ist denkbar, durch ein vorzugsweise langsames Annähern einer Hand eine stufenlose Verringerung der Lichtintensität und durch ein vorzugsweise langsames Entfernen der Hand eine stufenlose Erhöhung der Lichtintensität herbeizuführen. Auch der umgekehrte Weg ist denkbar. Weiterhin ist vorstellbar, dass die Lichteinheit durch eine Abwinkgeste komplett abschaltbar und durch eine "Komm-Her-Geste" komplett einschaltbar ist. Vorzugsweise weist dazu die Steuerungsschicht eine kapazitive Näherungssensorik und eine entsprechend zugeordnete Steuerungslogik auf.

Eine Abwinkgeste ist im Allgemeinen eine Bewegung der vom eigenen Körper weg gerichteten, leicht geöffneten Handfläche, bei der diese in einer schnellen Bewegung nach unten geführt wird. Als "Komm-Her-Geste" wird im Allgemeinen eine solche Bewegung der zum eigenen Körper hin gerichteten, leicht geöffneten Handfläche verstanden, bei der diese in einer schnellen Bewegung zum eigenen Körper geführt wird.

Zur Hinterspritzung mit einem die Dekorfolie stabilisierendem Material wird die Dekorfolie in ein Spritzgusswerkzeug gelegt. Vor der Hinterspritzung muss dann zunächst die Lichteinheit an der Dekorfolie angelegt und zuverlässig (unverrutschbar) positioniert werden. Um dies zu erleichtern kann vorteilhaft zwischen der Lichteinheit und der Dekorfolie eine transparente Haft- oder Schmelzschicht angeordnet sein. Bei Einsatz einer Schmelzschicht kann diese vor dem Hinterspritzen auf eine solche Temperatur erhitzt werden, dass diese anschmilzt. Durch die damit verbundene Anschmelzung wird eine feste Verbindung zwischen Dekorfolie und Lichteinheit erzeugt.

Anschließend kann das Spritzgusswerkzeug verschlossen werden und die aus Dekorfolie und Lichteinheit gebildete "Voreinheit" wird mit einem geeigneten, opaken Material hinterspritzt. So wird aus Dekorfolie, Lichteinheit und opaker Schicht schließlich eine Baueinheit gebildet, die das fertige Verkleidungsteil darstellt.

Zur Unterstützung einer homogenen Lichterscheinung bei Durchleuchtung der Dekorfolie ist es zweckmäßig, wenn die Lichteinheit flächig ausgebildet ist. Flächig im Sinne der Erfindung bedeutet, dass die Flächenerstreckung der Lichteinheit um ein Vielfaches größer ist als deren Dicke senkrecht zur Flächenerstreckung. Dabei muss die Flächenerstreckung nicht eben ausgebildet sein, sondern kann auch gekrümmt verlaufen.

Es ist bei einer Weiterbildung denkbar, dass die Lichteinheit folienartig ausgebildet ist. Dies trägt zum einen sehr zu einer kompakten Bauweise bei, zum anderen bedingt die Folienartigkeit eine leichte Verformbarkeit und damit Anpassbarkeit der Lichteinheit an unterschiedliche Geometrien der vorgeformten (beispielsweise tiefgezogenen) Dekorfolie. Die folienartige Lichteinheit kann vorzugsweise eine Dicke aufweisen, die bis zu in etwa einem Millimeter reicht, vorzugsweise eine Dicke unter einen Millimeter aufweist. Derartige, extrem dünne Leuchtfolien sind beispielsweise bei Verwendung von OLED-Folien (OLED = organische lichtemittierende Diode) oder durch Einsatz von Elektrolumineszenzfolien erzielbar, wobei die Aufzählung nicht als abschließend zu betrachten ist.

Die flächige oder sogar folienartige Lichteinheit kann in zweckmäßiger Ausgestaltung der Erfindung eine transluzente, milchige Lichtabstrahleinheit aufweisen. In diese kann das Licht einer oder mehrerer Lichtquellen (von einer Rückseite oder seitlich) eingestrahlt werden. Dies bietet eine gute Möglichkeit zur Erzeugung einer homogenen, flächigen Lichtabstrahlung. Als Lichtquellen werden vorzugsweise Leuchtdioden (LEDs) eingesetzt.

Wie bereits erwähnt, gibt es vielerlei Möglichkeiten, die Dekorfolie herzustellen und auszugestalten. Nur beispielhaft soll hier eine von vielen Möglichkeit genannt werden, nämlich dass die Dekorfolie durch eine lichtdurchlässige (also transluzente oder transparente) Kunststofffolie gebildet ist, die auf einer Seite zumindest bereichsweise mit wenigstens einer transluzenten Dekorschicht und auf einer anderen Seite zumindest bereichsweise mit wenigstens einer opaken Maskierungsschicht bedruckt ist. Dies erfolgt derart, dass auf der sichtbaren Oberseite der Dekorfolie wenigstens ein durch die Lichteinheit durchleuchtbarer und wenigstens ein durch die Lichteinheit nicht durchleuchtbarer Bereich entstehen. So ist auf einfache Weise eine Dekorfolie herstellbar, mit der die Grundlage zur Realisierung eines Tag- und eines Nachtdesigns geschaffen wird.

Mit der Erfindung soll auch ein Kraftfahrzeug unter Schutz gestellt werden, welches wenigstens ein erfindungsgemäßes Verkleidungsteil aufweist.

Bevorzugte Ausführungsbeispiele der Erfindung sind in den Figuren dargestellt und werden anhand der Figuren in der nachfolgenden Beschreibung näher erläutert, wobei auch noch weitere Vorteile der Erfindung deutlich werden. Dabei beziehen sich gleiche Bezugszeichen selbst in unterschiedlichen Figuren auf gleiche, vergleichbare oder funktional gleiche Bauteile, wobei entsprechende oder vergleichbare Eigenschaften und Vorteile erreicht werden, auch wenn eine wiederholte Beschreibung oder Bezugnahme darauf nicht erfolgt.

Es zeigen, jeweils schematisch
- Fig. 1: eine vereinfachte Schnittdarstellung eines Verkleidungsteils in einer ersten Ausführungsform,
- Fig. 2: eine vergrößerte Detaildarstellung gemäß Ausschnitt II aus Fig. 1,
- Fig. 3: eine Ansicht gemäß Ansicht III aus Fig. 2,
- Fig. 4: eine Schnittdarstellung der Dekorfolie des Verkleidungsteils,
- Fig. 5: die Ansicht auf das Verkleidungsteils gemäß Ansicht V aus Fig. 1, bei ausgeschalteter Beleuchtung,
- Fig. 6: eine Ansicht auf das Verkleidungsteils gemäß Ansicht VI aus Fig. 1, bei eingeschalteter Beleuchtung,
- Fig. 7: die Darstellung einer verwendbaren Lichteinheit im Querschnitt,
- Fig. 8: die Darstellung der Lichteinheit gemäß Ansicht VIII aus Fig. 7,

- Fig. 9: die Darstellung denkbarer Verfahrensschritte zur Bildung einer aus Dekorfolie, Lichteinheit und opaker Schicht gebildeten Einheit,
- Fig. 10: eine vereinfachte Schnittdarstellung eines Verkleidungsteils in einer zweiten Ausführungsform,
- Fig. 11: eine vergrößerte Detaildarstellung gemäß Ausschnitt XI aus Fig. 10,
- Fig. 12: eine Ansicht gemäß Ansicht XII aus Fig. 11 und
- Fig. 13: ein Kraftfahrzeug, welches mit erfindungsgemäßen Verkleidungsteilen im Innen- und Außenbereich ausgestattet ist.

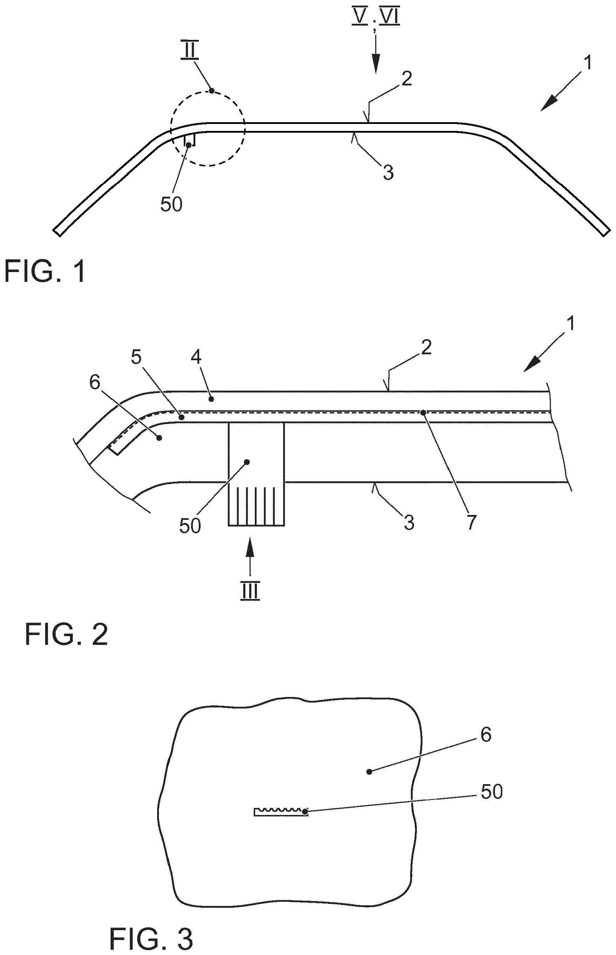

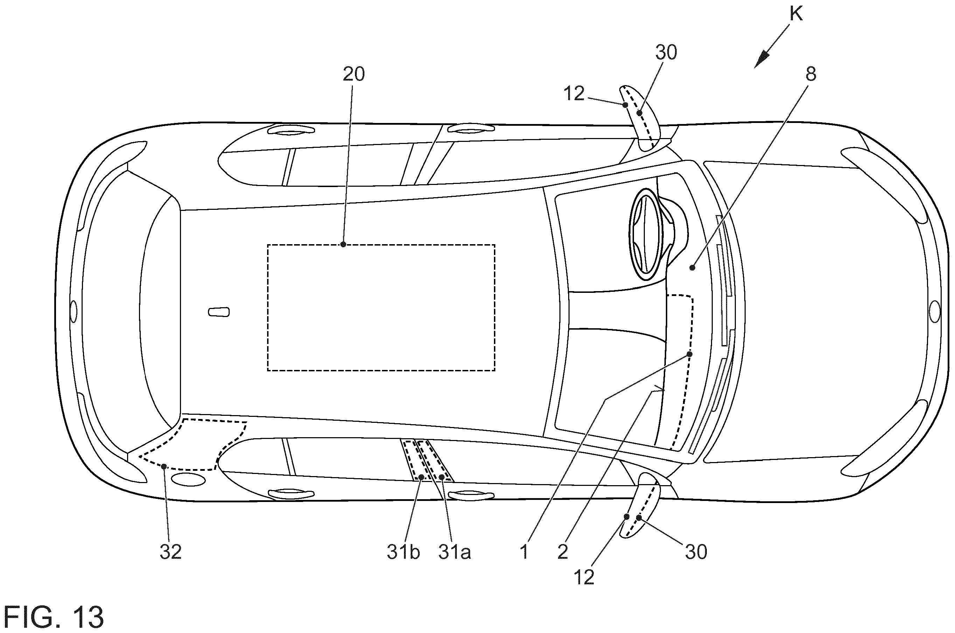

Zunächst wird auf die Fig. 1 bis 3 Bezug genommen. In diesen Figuren ist ein Verkleidungsteil 1 ersichtlich, welches beispielsweise als Innenverkleidungsteil Bestandteil einer Instrumententafel 8 (vgl. Fig. 13) sein kann. Das Verkleidungsteil 1 weist eine im Montagezustand des Verkleidungsteil 1 vom Fahrgastraum her sichtbare Oberseite 2 und eine Rückseite 3 auf.

Die sichtbare Oberseite 2 wird durch eine Dekorfolie 4 gebildet, von der ein beispielhafter Aufbau im Detail später noch näher erläutert wird.

Die Dekorfolie 4 ist mit einer opaken, vorzugsweise schwarzen Kunststoffschicht 6 hinterspritzt. Zwischen der Dekorfolie 4 und der opaken Kunststoffschicht 6 ist eine Lichteinheit 5 eingebettet, welche wenigstens eine Lichtquelle, vorzugsweise jedoch mehrere Lichtquellen aufweist. Die Lichteinheit 5 wird von der opaken Kunststoffschicht vollständig überdeckt.

Wie später noch näher beschrieben wird, ist die Lichteinheit 5 flächenhaft bzw. flächig ausgebildet. Insbesondere ist die Lichteinheit 5 folienartig ausgebildet. Zur Stromversorgung ist eine Stromversorgungsschnittstelle 50 in Form eines Steckverbinders mit der Lichteinheit 5 elektrisch verbunden. Die Stromversorgungsschnittstelle 50 ist ebenfalls folienartig ausgebildet und erstreckt sich in etwa senkrecht von der Flächenerstreckung der Lichteinheit 5.

Es ist ersichtlich, dass die Lichteinheit 5 vollkommen von der opaken Kunststoffschicht 6 umschlossen wird. Es kann nur Licht der Lichteinheit 5 nach oben in Richtung der Oberseite 2 austreten. Unerwünschtes Streulicht in andere Richtungen wird durch die opake Kunststoffschicht 6 wirkungsvoll verhindert. Die Lichteinheit 5 ist sozusagen zwischen der Dekorfolie 4 und der Kunststoffschicht 6 eingebettet. Auch ein Teil der Stromversorgungsschnittstelle 50 ist in der opaken Kunststoffschicht 6 eingebettet. Ein restlicher Teil der Stromversorgungsschnittstelle 50 ragt auf der Rückseite 3 aus der opaken Kunststoffschicht 6 heraus. So kann auf einfache Weise das Verkleidungsteil 1 mit einem Bordnetz eines Kraftfahrzeugs verbunden werden.

Anhand der Fig. 2 ist auch noch gestrichelt angedeutet, dass zwischen der Lichteinheit 5 und der Dekorfolie 4 eine transparente Schicht 7 vorhanden sein kann. Durch die als Haft- oder Schmelzschicht ausgebildete, transparente Schicht 7 kann zu einer zuverlässigen Verbindung zwischen der Lichteinheit 5 und der Dekorfolie 4 beigetragen werden, wie später noch erläutert wird.

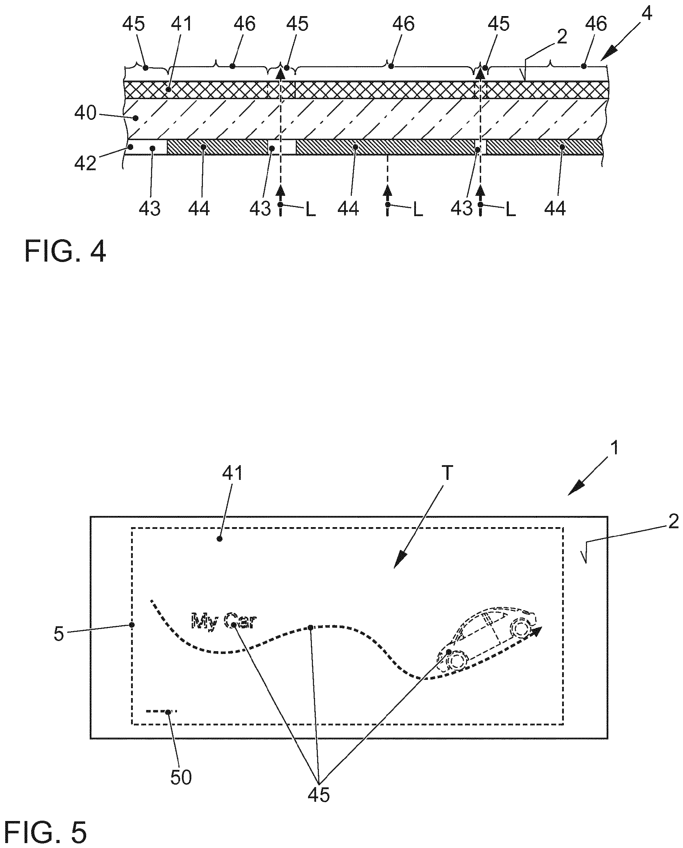

Anhand der Fig. 4 wird nunmehr eine mögliche Ausbildung der Dekorfolie 4 beispielhaft im Detail beschrieben. Die Basis der Dekorfolie 4 wird durch eine lichtdurchlässige, also transluzente oder transparente Kunststofffolie 40 gebildet. Auf der zur Oberseite 2 gerichteten Seite ist die Kunststofffolie 40 mit einer ebenfalls lichtdurchlässigen Dekorschicht 41 überzogen, insbesondere bedruckt. Die Dekorschicht 41 kann bspw. ein bestimmtes Muster und/oder eine bestimmte Farbe aufweisen. Auch dreidimensionale Strukturen sind denkbar.

Auf der der Oberseite 2 abgewandten Seite hingegen, ist die Kunststofffolie 40 mit einer vorzugsweise schwarzen Maskierungsschicht 42 bedeckt, insbesondere bedruckt. Die Maskierungsschicht 42 ist derart ausgebildet, dass sie lichtdurchlässige Bereiche 43 und lichtundurchlässige Bereiche 44 aufweist. Insbesondere sind die lichtdurchlässigen Bereiche 43 als Durchgangsöffnungen beziehungsweise freie Stellen der ansonsten durch die lichtundurchlässigen Bereiche 44 bedruckten Kunststofffolie 40 gebildet.

Auf diese Weise können Lichtstrahlen L einer hier nicht näher dargestellten Lichtquelle ungehindert durch die lichtdurchlässigen Bereiche 43, anschließend durch die lichtdurchlässige Kunststofffolie 40 und schließlich durch somit entstehende, durchleuchtbare bzw. durchleuchtete Bereiche 45 der lichtdurchlässigen Dekorschicht 41 beispielsweise in Richtung eines Fahrgastraums austreten.

Durch die genannten, lichtundurchlässigen Bereiche 44 hingegen werden undurchleuchtbare bzw. undurchleuchtete Bereiche 46 der Dekorschicht 41 gebildet.

Es ist nochmals zu erwähnen, dass die Ausbildung der Dekorfolie 4 auf vielerlei Art und Weise geschehen kann. Abweichend vom Ausführungsbeispiel in Fig. 4 ist beispielsweise denkbar, die Kunststofffolie 40 lediglich an einer Seite, also an der in der Figur sichtbaren unteren oder oberen Seite, mit einer oder mehreren Schichten zu überziehen. Es ist auch vorstellbar, die Kunststofffolie 40 auf beiden Seiten mit mehreren Schichten zu überziehen. Bei Beschichtung einer Seite mit mehreren Schichten kann die Anordnung einer der Maskierungsschicht 42 vergleichbaren Schicht bedarfsweise festgelegt werden. So kann beispielsweise auf der Oberseite 2 die Kunststofffolie 40 zunächst mit einer Maskierungsschicht, dann mit einer Farbschicht versehen sein oder umgekehrt. Weitere denkbare Ausführungsbeispiele lassen sich beliebig fortsetzen. Die Ausbildung der Dekorfolie 4 im Einzelnen bildet jedoch auch nicht den Kern der vorliegenden Erfindung.

Anhand der Fig. 5 ist nun dargestellt, wie bei ausgeschalteter Lichteinheit 5 im unbeleuchteten, also nicht durchleuchteten Zustand der Dekorfolie 4 ein Tagdesign T entsteht. Vom Fahrgastraum ist somit bei Tag die Dekorschicht 41 auf der Oberseite 2 erkennbar. Die durchleuchtbaren Bereiche 45 sind dabei allenfalls als in den Hintergrund tretende Muster wahrnehmbar und deshalb nur gepunktet angedeutet.

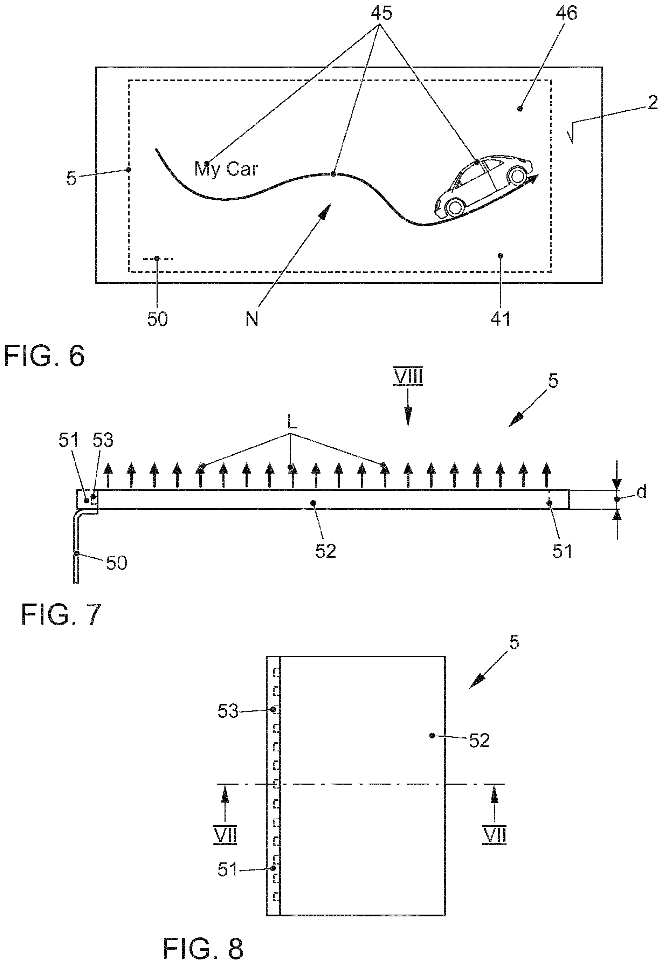

Anhand der Fig. 6 ist nun folgendes dargestellt: Wird die Dekorfolie 4 durch die Lichteinheit 5 (vgl. Fig. 2) durchleuchtet, so tritt für die Fahrzeuginsassen auf der Oberseite 2 ein durch die durchleuchtbaren Bereiche 45 der transluzenten Dekorschicht 41 gebildetes Design in den Vordergrund. Das Design der undurchleuchtbaren Bereiche 46 hingegen tritt in den Hintergrund. Somit ergibt sich ein Nachtdesign N, welches sich deutlich vom Tagdesign T (vergleiche Fig. 5) unterscheidet. Das Nachtdesign N kann durch entsprechende Ausgestaltung der Maskierungsschicht 42 beliebig gewählt werden.

In den Figuren 7 und 8 wird die Lichteinheit 5 nochmals in Alleinstellung dargestellt. Es ist ersichtlich, dass die Lichteinheit 5 als flächige Lichteinheit ausgebildet ist. Die flächige Lichteinheit kann beispielsweise aus einer flächigen Lichtabstrahleinheit 52 bestehen, in die an wenigstens einer Seite Licht von wenigstens einer Lichtquelle 53 eingestrahlt wird. Dabei ist die Lichteinheit 5 so beschaffen, dass Lichtstrahlen L senkrecht zur Flächenerstreckung der flächigen Lichteinheit bzw. der Lichtabstrahleinheit 52 und homogen über deren gesamte Fläche abgestrahlt werden. Vorzugsweise sind mehrere Lichtquellen 53 in Form von Leuchtdioden zu einer Lichtleiste 51 zusammengefasst. Eine homogene Lichtabstrahlung kann dadurch begünstigt werden, wenn die Lichtabstrahleinheit 52 eine transluzente, milchige Beschaffenheit aufweist.

Es ist zu bemerken, dass die flächige Lichteinheit 5 eine äußerst geringe Dicke d aufweist. Die Dicke d beträgt nur bis zu in etwa einen Millimeter, vorzugsweise wird die Dicke sogar unter einen Millimeter gewählt.

Durch die homogene Abstrahlung der Lichtstrahlen L im Wesentlichen über die gesamte Flächenerstreckung der flächigen Lichteinheit 5, die ausgesprochen geringe Dicke d und insbesondere durch die direkte Anordnung der Lichteinheit 5 hinter der Dekorfolie 4 kann eine ausgesprochen effiziente und präzise Durchleuchtung der Dekorfolie 4 erfolgen (vgl. auch Fig. 2).

Wie bereits erwähnt, ist die Lichteinheit 5 in ihrer Dicke d ausgesprochen dünn, insbesondere folienartig ausgebildet. Es ist auch denkbar, die Lichteinheit 5 als Elektrolumineszenzfolie oder auch als OLED-Folie (OLED = Organische Licht Emittierende Diode) auszubilden.

In jedem Fall wird durch die folienartige Ausgestaltung der Lichteinheit 5 vorteilhaft erreicht, dass diese platzsparend verbaut werden kann und zudem flexibel verformbar und damit an unterschiedlich geformte Dekorfolien anpassbar ist.

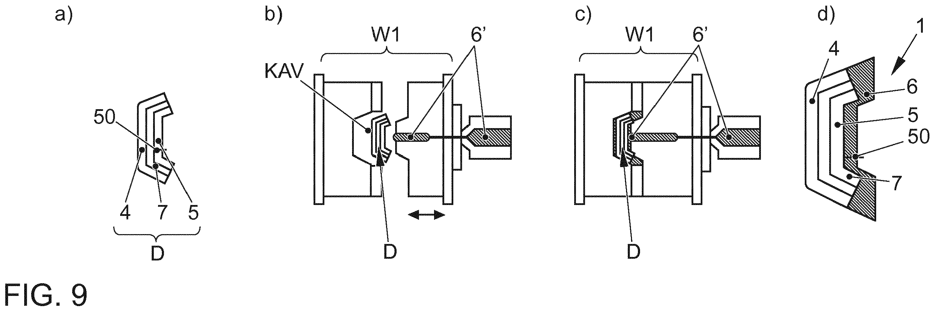

Anhand der Fig. 9a bis 9d soll nunmehr beschrieben werden, wie die vorgefertigte Dekorfolie 4 mit der Lichteinheit 5 versehen und anschließend mit der opaken Schicht 6 hinterspritzt werden kann.

So kann zunächst eine transparente Haft- oder Schmelzschicht 7 auf die hergestellte und vorgeformte Dekorfolie 4 aufgebracht werden. Dies erleichtert ein späteres Auflegen und verrutschsicheres Positionieren der Lichteinheit 5 an der Dekorfolie 4. Die vorgenannten Schritte können außerhalb eines Spritzgusswerkzeugs W1 oder auch bei bereits in das Spritzgusswerkzeug W1 eingelegter Dekorfolie 4 erfolgen. Die Dekorfolie 4 wird alsdann an ihrer Rückseite mit der flächigen Lichteinheit 5 verbunden. Durch die Dekorfolie 4 und die Leuchteinheit 5 wird ein durchleuchtbares Dekorteil D gebildet (vgl. Fig. 9a und 9b).

Bei Ausbildung der Schicht 7 als Schmelzschicht ist es zweckmäßig, das Dekorteil D beispielsweise im Spritzgusswerkzeug W1 derart zu erwärmen, dass die Schicht 7 aufweicht bzw. anschmilzt und somit eine feste Verbindung zwischen Dekorfolie 4 und Lichteinheit 5 entsteht.

Spätestens danach wird das Dekorteil D in eine Kavität KAV des Spritzgusswerkzeugs W1 gelegt. In dem Spritzgusswerkzeug W1 befindet sich opakes, insbesondere schwarzes Kunststoffgranulat 6'(vgl. 9b).

Nach Schließen des Spritzgusswerkzeugs W1 wird das Dekorteil D mit dem erweichten Kunststoffgranulat 6' hinterspritzt (vgl. Fig. 9c).

Schließlich kann das fertige, aus der Dekorfolie 4, der Leuchteinheit 5 und der hinterspritzten, opaken Kunststoffschicht 6 bestehende Verkleidungsteil 1 aus dem Werkzeug W1 entnommen werden (vgl. Fig. 9d).

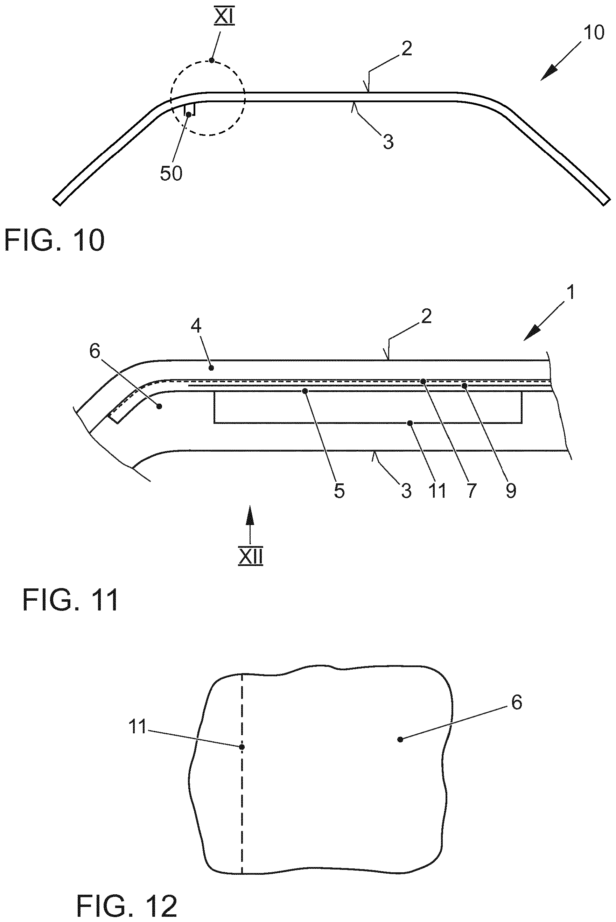

In den Fig. 10 bis 12 ist ein Verkleidungsteil 10 in einer zweiten Ausführungsform dargestellt. Im Unterschied zum Verkleidungsteil 1 weist das Verkleidungsteil 10 eine Steuerungsschicht 9 auf, die vorzugsweise unmittelbar unter der transparenten Haft- oder Schmelzschicht 7 angeordnet ist. Andere Anordnungen sind jedoch denkbar. Sie dient zur Ansteuerung der Lichteinheit 5. Konkret ist die Steuerungsschicht 9 transparent und als kapazitive Näherungssensorik ausgebildet. Sie ist extrem dünn und weist vorzugsweise nur eine Dicke von wenigen Zehntel Millimeter auf.

Die Steuerungsschicht 9 ermöglicht aufgrund einer internen oder ihr zugeordneten Steuerungslogik ein Einschalten oder Ausschalten der Lichteinheit 5, sowie eine Veränderung in deren Lichtintensität. Dabei lässt die Steuerungsschicht 9 eine Ansteuerung durch Gestik eines Fahrzeuginsassen zu. Beispielsweise ist denkbar, durch ein vorzugsweise langsames Annähern einer Hand an die Oberseite 2 des Verkleidungsteils 10 eine stufenlose Verringerung der Lichtintensität und durch ein vorzugsweise langsames Entfernen der Hand weg von der Oberseite 2 eine stufenlose Erhöhung der Lichtintensität herbeizuführen. Auch der umgekehrte Weg ist denkbar. Weiterhin ist vorstellbar, dass die Lichteinheit 5 durch eine Abwinkgeste komplett abschaltbar und durch eine "Komm-Her-Geste" komplett einschaltbar ist.

Des Weiteren weist das Verkleidungsteil 10 eine Stromversorgungsschnittstelle 11 für die Lichteinheit 5 und die Steuerungsschicht 9 auf, welche im Ausführungsbeispiel als induktive Schnittstelle ausgebildet ist. Die Stromversorgungsschnittstelle 11 grenzt unmittelbar an die Steuerungsschicht 9 an. Es ist also ein Aufbau des Verkleidungsteils 10 ohne nach außen ragende, elektrische Verbindungsteile möglich. Dies vereinfacht die Montage. Nach Montage des Verkleidungsteils wirkt die Stromversorgungsschnittstelle 11 mit einem einen Induktionsstrom erzeugenden, fahrzeugseitigen Gegenpart (nicht dargestellt) zusammen.

Abschließend zeigt Fig. 13 ein Kraftfahrzeug K, bei dem das erfindungsgemäße Verkleidungsteil 1 zur Anwendung kommt. Das Verkleidungsteil 1 ist insbesondere ein rechtsseitiger Bestandteil einer Instrumententafel 8. Ferner werden erfindungsgemäße Verkleidungsteile 20 (Innenverkleidung im Dachhimmel), 30 (Außenverkleidung von Außenspiegeln 12) sowie 31 a,b (Außenverkleidung im B-Säulenbereich) und 32 (Außenverkleidung im C-Säulenbereich) eingesetzt. Die Verkleidungsteile 31 und 32 sind beispielhaft nur auf einer Seite des Kraftfahrzeugs K dargestellt, jedoch natürlich auch auf der anderen Seite des Kraftfahrzeugs K denkbar.

Somit wird ein Kraftfahrzeug K bereitgestellt, bei dem mit reduziertem Montage- und Teileaufwand sowohl ein ansprechendes Tagdesign als auch ein ansprechendes Nachtdesign erzeugbar ist.

### BEZUGSZEICHENLISTE

- 1: Verkleidungsteil
- 2: Oberseite
- 3: Rückseite
- 4: Dekorfolie
- 5: Lichteinheit
- 6: opake Kunststoffschicht
- 6': opakes Kunststoffgranulat
- 7: transparente Haft- oder Schmelzschicht
- 8: Instrumententafel
- 9: Steuerungsschicht
- 10: Verkleidungsteil
- 11: Stromversorgungsschnittstelle, induktiv
- 12: Außenspiegel
- 20: Verkleidungsteil
- 30: Verkleidungsteil
- 31a,b: Verkleidungsteil
- 32: Verkleidungsteil
- 40: lichtdurchlässige Kunststofffolie
- 41: lichtdurchlässige Dekorschicht
- 42: Maskierungsschicht
- 43: lichtdurchlässige Bereiche (Durchgangsöffnungen)
- 44: lichtundurchlässige Bereiche
- 45: durchleuchtbare Bereiche
- 46: undurchleuchtbare Bereiche
- 50: Stromversorgungsschnittstelle; Steckverbinder
- 51: Lichtleiste
- 52: flächige Lichtabstrahleinheit
- 53: Lichtquellen

- d: Dicke
- D: durchleuchtbares Dekorteil
- K: Kraftfahrzeug
- KAV: Kavität
- L: Lichtstrahlen
- N: Nachtdesign
- T: Tagdesign
- W1: Spritzgusswerkzeug

## Patentansprüche

1. Verkleidungsteil (1,10,20,30,31a,31b,32) für ein Kraftfahrzeug (K), wobei das Verkleidungsteil (1,10,20,30,31a,31b,32) eine im Montagezustand durch eine zumindest bereichsweise lichtdurchlässige Dekorfolie (4) gebildete, sichtbare Oberseite (2) aufweist, auf der wenigstens ein Bereich ausgebildet ist, der durch das Licht (L) wenigstens einer Lichtquelle (53) erhellbar und zumindest bei Einschaltung der Lichtquelle (53) wahrnehmbar ist, wobei eine die wenigstens eine Lichtquelle (53) aufweisende Lichteinheit (5) an einer der Oberseite (2) gegenüberliegenden Unterseite der Dekorfolie (4) angeordnet ist, **dadurch gekennzeichnet, dass** die Lichteinheit (5) in Schichtreihenfolge mit einer ersten, das Verkleidungsteil (1,10,20,30,31a,31b,32) stabilisierenden, opaken Schicht (6) hinterspritzt und von dieser vollkomen umschlossen ist, derart, dass die Dekorfolie (4), die Lichteinheit (5) und die opake Schicht (6) eine fest miteinander verbundene, montierbare Baueinheit ausbilden.

2. Verkleidungsteil (1,10,20,30,31a,31b,32) nach dem vorhergehenden Anspruch, **dadurch gekennzeichnet, dass** die opake Schicht (6) schwarz ist.

3. Verkleidungsteil (1,10,20,30,31a,31b,32) nach einem der vorhergehenden Ansprüche, **dadurch gekennzeichnet, dass** eine die Lichteinheit (5) mit Strom versorgende Stromversorgungsschnittstelle (11, 50) zu einem Bordnetz durch die opake Schicht (6) zumindest überwiegend abgedeckt wird.

4. Verkleidungsteil (10) nach Anspruch 3, **dadurch gekennzeichnet, dass** die die Lichteinheit (5) mit Strom versorgende Stromversorgungsschnittstelle (11) als induktive Schnittstelle ausgebildet ist.

5. Verkleidungsteil (10) nach einem der vorhergehenden Ansprüche, **dadurch gekennzeichnet, dass** eine Steuerungsschicht (9) zur Ansteuerung der Lichteinheit (5) vorhanden ist, die von der opaken Schicht (6) abgedeckt wird.

6. Verkleidungsteil (1,10,20,30,31a,31b,32) nach einem der vorhergehenden Ansprüche, **dadurch gekennzeichnet, dass** zwischen der Lichteinheit (5) und der Dekorfolie (4) eine transparente Haft- oder Schmelzschicht (7) angeordnet ist.

7. Verkleidungsteil (1,10,20,30,31a,31b,32) nach einem der vorhergehenden Ansprüche, **dadurch gekennzeichnet, dass** die Lichteinheit (5) flächig ausgebildet ist.

8. Verkleidungsteil (1,10,20,30,31a,31b,32) nach einem der vorhergehenden Ansprüche, **dadurch gekennzeichnet, dass** die Lichteinheit (5) folienartig ausgebildet ist.

9. Verkleidungsteil (1,10,20,30,31a,31b,32) nach einem der vorhergehenden Ansprüche, **dadurch gekennzeichnet, dass** die Lichteinheit (5) eine transluzente, milchige Lichtabstrahleinheit (52) aufweist, in das das Licht (L) der wenigstens einen Lichtquelle (53) eingestrahlt wird.

10. Verkleidungsteil (1,10,20,30,31a,31b,32) nach einem der vorhergehenden Ansprüche, **dadurch gekennzeichnet, dass** die Dekorfolie (4) durch eine lichtdurchlässige Kunststofffolie (40) gebildet ist, die auf einer Seite zumindest bereichsweise mit wenigstens einer lichtdurchlässigen Dekorschicht (41) und auf einer Seite zumindest bereichsweise mit wenigstens einer opaken Maskierungsschicht (42) überzogen ist, derart, dass auf der sichtbaren Oberseite (2) der Dekorfolie (4) wenigstens ein durch die Lichteinheit (5) durchleuchtbarer (45) und wenigstens ein durch die Lichteinheit (5) nicht durchleuchtbarer Bereich (46) entstehen.

11. Kraftfahrzeug (K) mit wenigstens einem Verkleidungsteil (1,10,20,30,31a,31b,32) nach einem der vorhergehenden Ansprüche.

12. Verfahren zur Herstellung eines Verkleidungsteils (1,10,20,30,31a,31b,32) nach einem der Ansprüche 1 bis 10, wobei eine zumindest bereichsweise lichtdurchlässige Dekorfolie (4) in ein Spritzgusswerkzeug (W1) eingelegt, eine flächige Lichteinheit (5) an der Dekorfolie (4) unverrutschbar positioniert, das Spritzgusswerkzeug (W1) verschlossen und die aus Dekorfolie (4) und Lichteinheit (5) gebildete Voreinheit mit einem opaken Material hinterspritzt wird.

13. Verfahren nach Anspruch 12, **dadurch gekennzeichnet, dass** zwischen der Dekorfolie (4) und der Lichteinheit (5) eine Haft- oder Schmelzschicht (7) angeordnet und vor dem Hinterspritzen auf eine solche Temperatur erhitzt wird, dass diese anschmilzt.

## Claims

1. Trim part (1, 10, 20, 30, 31a, 31b, 32) for a motor vehicle (K), wherein the trim part (1, 10, 20, 30, 31a, 31b, 32) has a visible upper side (2), which is formed in the installed state by a decorative film (4), which is at least in part light-transmissive, and on which upper side (2) at least one region is formed that is able to be brightened by the light (L) from at least one light source (53) and is perceivable at least when the light source (53) is switched on, wherein a light unit (5) having the at least one light source (53) is arranged on an underside of the decorative film (4) lying opposite the upper side (2), **characterized in that**, in the order of the layers, a first, opaque layer (6) stabilizing the trim part (1, 10, 20, 30, 31a, 31b, 32) is back-injection-moulded behind the light unit (5), which is entirely enclosed thereby such that the decorative film (4), the light unit (5) and the opaque layer (6) form a fixedly interconnected mountable structural unit.

2. Trim part (1, 10, 20, 30, 31a, 31b, 32) according to the preceding claim, **characterized in that** the opaque layer (6) is black.

3. Trim part (1, 10, 20, 30, 31a, 31b, 32) according to either of the preceding claims, **characterized in that** a current supply interface (11, 50) to an electrical system supplying current to the light unit (5) is at least mostly covered by the opaque layer (6).

4. Trim part (10) according to Claim 3, **characterized in that** the current supply interface (11) supplying current to the light unit (5) is embodied in the form of an inductive interface.

5. Trim part (10) according to one of the preceding claims, **characterized in that** a control layer (9) for controlling the light unit (5), which is covered by the opaque layer (6), is present.

6. Trim part (1, 10, 20, 30, 31a, 31b, 32) according to one of the preceding claims, **characterized in that** a transparent adhesive or melt layer (7) is arranged between the light unit (5) and the decorative film (4).

7. Trim part (1, 10, 20, 30, 31a, 31b, 32) according to one of the preceding claims, **characterized in that** the light unit (5) is embodied to be two-dimensional.

8. Trim part (1, 10, 20, 30, 31a, 31b, 32) according to one of the preceding claims, **characterized in that** the light unit (5) is embodied to be like a film.

9. Trim part (1, 10, 20, 30, 31a, 31b, 32) according to one of the preceding claims, **characterized in that** the light unit (5) has a translucent, milky light-emission unit (52) into which the light (L) from the at least one light source (53) is radiated.

10. Trim part (1, 10, 20, 30, 31a, 31b, 32) according to one of the preceding claims, **characterized in that** the decorative film (4) is formed by a light-transmissive plastics film (40), which is covered, on one side, at least in part with at least one light-transmissive decorative layer (41) and, on one side, at least in part with at least one opaque masking layer (42) in a manner such that, on the visible upper side (2) of the decorative film (4), at least one region (45), through which light from the light unit (5) radiates, and at least one region (46), through which no light from the light unit (5) radiates, are produced.

11. Motor vehicle (K) having at least one trim part (1, 10, 20, 30, 31a, 31b, 32) according to one of the preceding claims.

12. Method for producing a trim part (1, 10, 20, 30, 31a, 31b, 32) according to one of Claims 1 to 10, wherein a decorative film (4), which is at least in part light transmissive, is placed into an injection moulding tool (W1), a two-dimensional light unit (5) is positioned at the decorative film (4) such that it cannot slip, the injection moulding tool (W1) is closed, and an opaque material is back-injection-moulded behind the preliminary unit formed from the decorative film (4) and the light unit (5).

13. Method according to Claim 12, **characterized in that** an adhesive or melt layer (7) is arranged between the decorative film (4) and the light unit (5) and is heated, before the back injection moulding, to a temperature such that it begins to melt.

## Revendications

1. Pièce d'habillage (1, 10, 20, 30, 31a, 31b, 32) pour un véhicule automobile (K), la pièce d'habillage (1, 10, 20, 30, 31a, 31b, 32) possédant un côté supérieur (2) visible, formé par un film décoratif (4) transparent à la lumière au moins dans certaines zones, sur lequel est formée au moins une zone qui peut être éclairée par la lumière (L) d'au moins une source de lumière (53) et qui peut être perçue au moins lors de l'allumage de la source de lumière (53), une unité lumineuse (5) qui possède l'au moins une source de lumière (53) étant disposée au niveau d'un côté inférieur du film décoratif (4) à l'opposé du côté supérieur (2), **caractérisée en ce que** l'unité lumineuse (5) est surmoulée à l'arrière d'une première couche opaque (6) qui stabilise la pièce d'habillage (1, 10, 20, 30, 31a, 31b, 32) et est entièrement entourée par celle-ci, de sorte que le film décoratif (4), l'unité lumineuse (5) et la couche opaque (6) forment une unité modulaire assemblable dont les éléments sont reliés à demeure entre eux.

2. Pièce d'habillage (1, 10, 20, 30, 31a, 31b, 32) selon la revendication précédente, **caractérisée en ce que** la couche opaque (6) est noire.

3. Pièce d'habillage (1, 10, 20, 30, 31a, 31b, 32) selon l'une des revendications précédentes, **caractérisée en ce qu'**une interface d'alimentation électrique (11, 50) vers un réseau de bord, qui alimente l'unité lumineuse (5) en électricité, est au moins majoritairement recouverte par la couche opaque (6).

4. Pièce d'habillage (10) selon la revendication 3, **caractérisée en ce que** l'interface d'alimentation électrique (11) qui alimente l'unité lumineuse (5) en électricité est réalisée sous la forme d'une interface inductive.

5. Pièce d'habillage (10) selon l'une des revendications précédentes, **caractérisée en ce qu'**une couche de commande (9) destinée à exciter l'unité lumineuse (5) est présente, laquelle est recouverte par la couche opaque (6).

6. Pièce d'habillage (1, 10, 20, 30, 31a, 31b, 32) selon l'une des revendications précédentes, **caractérisée en ce qu'**entre l'unité lumineuse (5) et le film décoratif (4) est disposée une couche d'adhérence ou de fusion (7) transparente.

7. Pièce d'habillage (1, 10, 20, 30, 31a, 31b, 32) selon l'une des revendications précédentes, **caractérisée en ce que** l'unité lumineuse (5) est de configuration plate.

8. Pièce d'habillage (1, 10, 20, 30, 31a, 31b, 32) selon l'une des revendications précédentes, **caractérisée en ce que** l'unité lumineuse (5) est réalisée en forme de film.

9. Pièce d'habillage (1, 10, 20, 30, 31a, 31b, 32) selon l'une des revendications précédentes, **caractérisée en ce que** l'unité lumineuse (5) possède une unité d'émission de lumière (52) translucide laiteuse, dans laquelle est injectée la lumière (L) de l'au moins une source de lumière (53).

10. Pièce d'habillage (1, 10, 20, 30, 31a, 31b, 32) selon l'une des revendications précédentes, **caractérisée en ce que** le film décoratif (4) est formé par un film en matière plastique (40) transparent à la lumière qui d'un côté est recouvert au moins dans certaines zones par au moins une couche de masquage (41) transparente et d'un côté est recouvert au moins dans certaines zones par au moins une couche de masquage (42) opaque, de sorte qu'au moins une zone éclairable par transparence (45) par l'unité lumineuse (5) et au moins une zone non éclairable par transparence (46) par l'unité lumineuse (5) sont formées sur le côté supérieur (2) visible du fil décoratif (4).

11. Véhicule automobile (K) comprenant au moins une pièce d'habillage (1, 10, 20, 30, 31a, 31b, 32) selon l'une des revendications précédentes.

12. Procédé de fabrication d'une pièce d'habillage (1, 10, 20, 30, 31a, 31b, 32) selon l'une des revendications 1 à 10, un film décoratif (4) transparent à la lumière au moins dans certaines zones étant introduit dans un outil de moulage par injection (W1), une unité lumineuse (5) étant positionnée contre le film décoratif (4) de manière à ne pas pouvoir glisser, l'outil de moulage par injection (W1) étant fermé et l'unité préliminaire formée par le film décoratif (4) et l'unité lumineuse (5) étant surmoulée à l'arrière avec un matériau opaque.

13. Procédé selon la revendication 12, **caractérisé en ce qu'**une couche d'adhérence ou de fusion (7) est disposée entre le film décoratif (4) et l'unité lumineuse (5) et, avant le surmoulage à l'arrière, est chauffée à une température telle qu'elle adhère par fusion.
